# EUROPEAN PATENT SPECIFICATION

(11) **EP 1 655 266 B1**
(45) Date of publication and mention of the grant of the patent: **25.09.2013**
(21) Application number: 05256467.1
(22) Date of filing: 18.10.2005
(51) Int. Cl.: C01B 31/02, B01J 21/18, B01J 23/42, B01J 35/00, H01M 4/92, B82Y 30/00, H01M 8/10

(54) **Method of preparing a carbon nanosphere having at least one opening, impregnated catalyst comprising the carbon nanosphere and fuel cell using this catalyst**
Verfahren zur Herstellung von Kohlenstoffnanokugel mit mindestens einer Öffnung, imprägnierter Katalysator mit Kohlenstoffnanokugeln und Brennstoffzelle unter Verwendung des Katalysators
Procédé de preparation d'une nanosphere de carbone avec au moins une ouverture, catalyseur impregné comprenant cette nanosphere de carbone et pile à combustible utilisant ce catalyseur

(30) Priority: 02.11.2004 KR 2004088218
(43) Date of publication of application: 10.05.2006
(73) Proprietor: Samsung SDI Co., Ltd., Suwon-si, Gyeonggi-do (KR)
(72) Inventor: Chang, Hyuk, Seongnam-si Gyeonggi-do (KR); Pak, Chan-Ho, Seocho-gu Seoul (KR); Wang, Jia Nong, Shanghai (CN)
(74) Representative: Zijlstra, Robert Wiebo Johan

(56) References cited:
- EP-A1- 1 731 483
- WO-A-02/29836
- WO-A1-2004/064877
- HOU H ET AL: "CARBON NANOTUBES AND SPHERES PRODUCED BY MODIFIED FERROCENE PYROLYSIS" CHEMISTRY OF MATERIALS, AMERICAN CHEMICAL SOCIETY, WASHINGTON, US, vol. 14, no. 9, September 2002 (2002-09), pages 3990-3994, XP001192545 ISSN: 0897-4756
- NASIBULIN A G ET AL: "Carbon nanotubes and onions from carbon monoxide using Ni(acac)2 and Cu(acac)2 as catalyst precursors" CARBON, vol. 41, no. 14, 2003, pages 2711-2724, XP004464998 ISSN: 0008-6223
- MA Y ET AL: "A practical route to the production of carbon nanocages" CARBON, XX, XX, vol. 43, no. 8, July 2005 (2005-07), pages 1667-1672, XP004926003 ISSN: 0008-6223
- TSANG S C ET AL: "A SIMPLE CHEMICAL METHOD OF OPENING AND FILLING CARBON NANOTUBES" NATURE, NATURE PUBLISHING GROUP, LONDON, GB, vol. 372, 10 November 1994 (1994-11-10), pages 159-162, XP002933443 ISSN: 0028-0836

## Description

The present invention relates to a method of preparing a carbon nanosphere having at least one opening a supported catalyst, and a fuel cell, and more particularly, to a supported catalyst in which metal catalyst particles are supported on the carbon nanosphere having at least one opening, and a fuel cell using the supported catalyst.

Fuel cells are clean energy sources that have received considerable interest as one of the fossil fuels alternatives for replacing fuel cells.

A fuel cell is a power generating system that produces direct current electricity through an electrochemical reaction of fuel, such as hydrogen, natural gas, or methanol with an oxidizing agent. In general, the fuel cell includes an anode (fuel electrode) where a supplied fuel is electrochemically oxidized, a cathode (air electrode) where the oxidizing agent is electrochemically reduced, and an electrolyte membrane which is interposed between the anode and the cathode and provides a path for transporting ions produced at the anode to the cathode. Electrons are generated through the oxidation of the fuel at the anode, and work via an external circuit, and are then returned to the cathode to reduce the oxidizing agent. One of the most important elements is that such fuel cell is contained in the anode and the cathode to catalyze the electrochemical reaction. Thus, many trials have been conducted to increase the activity of the catalyst used in the electrodes. The catalytic activity increases as a reaction surface area of the catalyst increases, and thus, it is required to increase the reaction surface area by decreasing a particle diameter of the catalyst to uniformly distribute the catalyst on the electrodes.

Conventionally, a platinum (Pt) catalyst or the like is first pasted and then applied to a carbon cloth, etc. However, the catalyst cannot be uniformly dispersed and the surface area and electrical conductivity of the carbon support, etc., are not sufficiently high.

A metal catalyst supported on porous carbon powders has been suggested. A specific surface area of the porous carbon powders can be controlled such that a capability to impregnate a catalyst is high. However, when the carbon powders are graphited or crystallized to increase the electrical conductivity, the structures of the carbon powders are changed and also, the electrical conductivity cannot be sufficiently increased. Thus, it is required to improve the surface properties of the carbon powders.

In order to overcome these problems, the use of carbon nanotubes or nanohorns as supports has been suggested and much research has been done regarding this matter.

Carbon nanotubes are very fine cylindrical materials having a diameter of between several nm and several tens of nm, a length of between several µm and several hundreds of µm, and high anisotropy, and various structures and shapes, such as single-walled, multi-walled, or rope shape. In carbon nanotubes, one carbon atom bonds to three other carbon atoms so as to form a hexagonal honeycomb (a pentagonal or heptagonal honeycomb may be formed depending on the curvature radius at the bounding position of the carbon atom). Carbon nanotubes may have a metallic or semiconductor property according to their structures, are mechanically strong (about 100 times stronger than steel), have chemical stability, high thermal conductivity, and a hollow structure. Thus, carbon nanotubes can be used in various microscopic and macroscopic applications, for example, as catalyst carriers.

Carbon nanotubes have high electrical conductivity and thus, can increase the utilization of the electrical energy generated during an electrochemical reaction. However, the catalyst can be supported only on outer walls of carbon nanotubes and the surface area on which the catalyst can be substantially supported is small, relative to the total surface area of the carbon nanotubes, that is, the capability to impregnate a catalyst is low. Further, when the carbon nanotubes have a high aspect ratio, they cannot be easily uniformly dispersed on the surface of an electrode during formation of the electrode. In particular, a diffusion resistance of a material is high due to the closed structures of their ends, which is one of the largest obstacles to their use as the catalyst carrier.

In order to overcome the problems, the use of carbon nanohorns was suggested. The carbon nanohorns have a cone structure, similar to ends of nanotubes which are cut off from the nanotubes. The carbon nanohorns are very short and a catalyst can be impregnated even in their innermost portions. However, the carbon nanohorns have an internal diameter of about 1 nm and the optimal particle size of the catalyst is set to 2-3 nm, and thus, the catalyst cannot be sufficiently supported on the carbon nanohorns. In this case, the catalyst is supported only on the outer walls of the nanohorns and the advantage of the high surface area of the nanohorns is lost. Further, each of the nanohorns has one end closed, and thus, when the nanohorns are used as the catalyst supports, a fuel cannot flow smoothly, thereby resulting in a low catalytic efficiency.

In order to overcome these problems, the use of short carbon nanotubes having open ends has been suggested. However, since the carbon nanotubes are flexible and resistant to an applied stress, the short carbon nanotubes having open ends cannot be easily prepared.

Methods of cutting a carbon nanotube in order to prepare a short carbon nanotube having open ends have been suggested. One method includes using ultrasonic waves (K.L. Lu et al., Carbon 34, 814-816 (1996); K.B. Shelimov et al., Chem. Phys. Lett. 282, 429-434 (1998); J. Liu et al., Science 280, 1253-1256(1998)). Another method includes using an STM voltage (L.C. Venema et al., Appl. Phys. Lett. 71, 2629-2631(1999)). However, in the former method, the resultant short carbon nanotubes have a low yield and an inconsistent relative length. In the latter method, the resultant short carbon nanotubes do not have open ends. A further method includes using ball milling, but the short carbon nanotubes having both ends open cannot be produced.

That is, a conventional carbon nanotube can be processed into a short carbon nanotube having both ends open by a mechanical or chemical treatment, but the processing cannot be easily performed due to a strong binding force between crystalline carbons.

WO02/29839 discloses the fabrication of an electrode by using graphitic carbon which can have spherical shape and a diameter as low as 100 nm. Hou et al, Chem. Mater., vol. 14, 2002, pages 3990-3994 reports the production of carbon nanospheres by pre-vaporizing an organometallic compound (ferrocene) and a carbon precursor (anthracene) and further by pyrolysing the mixture at higher temperatures in a hydrogen atmosphere. The product has a diameter of up to 200 nm. The carbon nanospheres are annealed to remove the iron trapped inside.

A carbon nanosphere having at least one opening has higher utilization of a surface area and electrical conductivity and lower mass transfer resistance than a conventional carbon nanosphere or carbon nanotube, thus allowing for higher current density and cell voltage with a smaller amount of metal catalyst per unit area of a fuel cell electrode.

The present invention provides a method of preparing the carbon nanosphere having at least one opening in a simple and efficient manner.

According to one aspect of the present invention, there is provided a method of preparing a carbon nanosphere having at least one opening according to claim 1.

According to yet another aspect of the present invention, there is provided a carbon nanosphere-supported catalyst, including; a carbon nanosphere having at least one opening, prepared using above method; and metal catalyst particles uniformly supported on an inner wall and an outer wall of the carbon nanosphere having the at least one opening.

According to still another aspect of the present invention, there is provided a fuel cell including: a cathode; an anode; and an electrolyte membrane interposed between the cathode and the anode, wherein at least one of the cathode and the anode contains the carbon nanosphere-impregnated catalyst.

The above and other features and advantages of the present invention will become more apparent by describing in detail exemplary embodiments thereof with reference to the attached drawings in which:
FIG. 1 is a flow chart of a method of preparing a carbon nanosphere having at least one opening according to an embodiment of the present invention;
FIGS. 2A, 2B, 3A and 3B are transmission electron microscopic (TEM) photos of carbon nanospheres having at least one opening;
FIG. 4 is an X-ray diffraction (XRD) graph of a metal catalyst supported on a carbon nanosphere having at least one opening according to an embodiment of the present invention; and
FIG. 5 is a graph of a current density vs. a cell petential for a fuel cell according to an embodiment of the present invention.

Hereinafter, the present invention will be described in more detail.

According to an embodiment of the present invention, a method of preparing a carbon nanosphere having at least one opening wherein the opening has a diameter of 5-150 nm is provided. In the method, first a carbon nanosphere is prepared using a conventional method, and then the obtained carbon nanosphere is treated with an acid to form the opening. In order to obtain the carbon nanosphere having a desired diameter and wall thickness, ratios of flow rates of supplied reactants must be suitably controlled.

The conventional method of preparing a carbon nanosphere can be an arc discharge method, a laser vaporization method, a thermochemical vapor deposition method, and a plasma enhanced chemical vapor deposition method, etc.

In the case of the arc discharge method and the laser vaporization method, a synthesis yield of a carbon nanotube is relatively low, and a large number of carbon clusters in an amorphous phase are produced besides the carbon nanotube during the synthesis, which requires a complicated purifying process. Also, is difficult to grow a large amount of carbon nanotubes on a substrate with a large area.

The chemical vapor deposition method vertically arranged carbon nanotubes can be synthesize of at a high purity and a high yield, and thus this method is one of the most favored methods. However, it is very difficult to control a diameter and a length of a carbon nanotube and the length of the carbon nanotube is several µm to several tens of µm, which is not suitable for a catalyst carrier.

Accordingly, in order to prepare the carbon nanosphere using the conventional chemical vapor deposition method, operation parameters of the method must be changed. For example, a growth temperature is lowered and a residence time is reduced.

When the growth temperature of the carbon nanosphere is low, an organic metal compound used as a reactant in preparing the carbon nanosphere having at least one opening is a material which can be decomposed at a relatively low temperature. The organic metal compound may be copper tartrate. The copper tartrate includes a monovalent copper compound (Cu₂C₄H₄O₆) and a divalent copper compound (CuC₄H₄O₆), i.e., copper (II) tartrate. Preferably, the copper tartrate is copper (II) tartrate. In many cases, such an organic metal compound, including copper (II) tartrate, is generally present in the form of a hydrated salt. Copper (II) tartrate includes DL-tartrate and L-tartrate, which are dihydrated salts, and mesotartrate, which is a trihydrated salt.

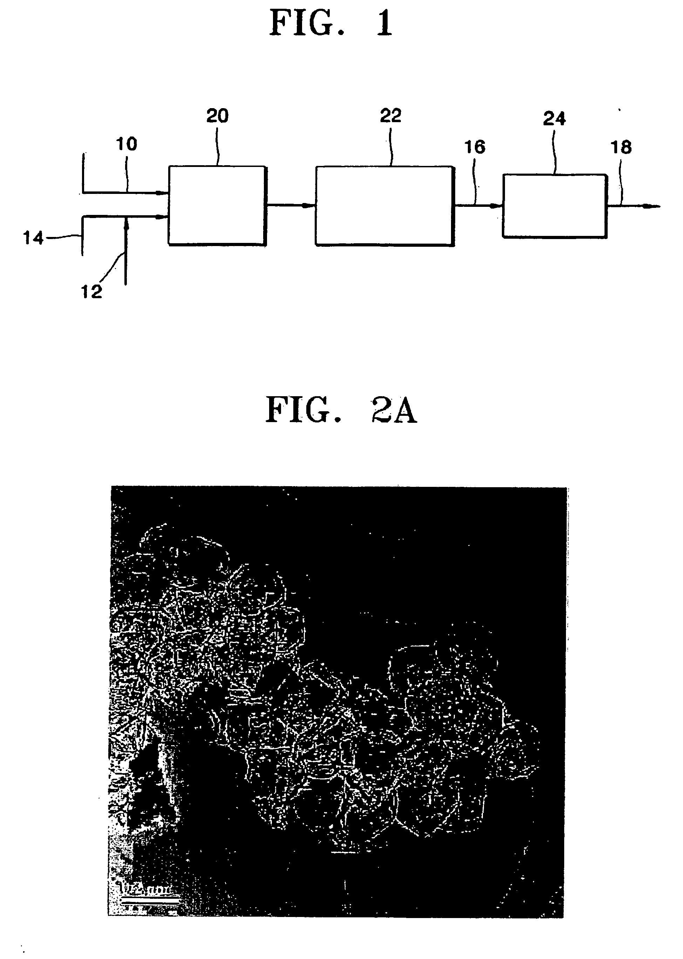

Referring to FIG. 1, an organic metal compound 10 is preheated in a preheating region 20 in order to evaporate hydrated water molecules. Another purpose of the preheating is to control the size of the copper nanoparticle or copper nanosphere. The size of the copper nanoparticle or copper nanosphere can be controlled by adjusting the growth temperature and the residence time.

The temperature in the preheating region 20 to evaporate the hydrated water molecules may be 100-200°C. If the temperature in the preheating region 20 is less than 100°C, the crystalline water molecules, i.e., the hydrated water molecules cannot sufficiently evaporated. If the temperature in the preheating region 20 is greater than 200°C, the organic metal compound 10 may be excessively decomposed, thereby forming larger metal particles.

The residence time of the organic metal compound 10 in the preheating region 20 may be 20-40 minutes. If the residence time is less than 20 minutes, the crystalline water molecules, i.e., the hydrated water molecules cannot sufficiently evaporated. If the residence time is greater than 40 minutes, the organic metal compound 10 may be completely decomposed, and thus the metal in the organic metal compound 10 may be formed into particles.

Water molecules thus evaporated in the preheating region 20 may be removed using a water removal unit, such as a cooling condenser.

The organic metal compound 10 from which water was removed in the preheating region 20, a dilution gas 12, and a hydrocarbon gas 14 are transferred to a reaction furnace 22, in which a reaction for generating a carbon nanosphere 16 is performed. The hydrocarbon gas 14 may be a conventional hydrocarbon gas used in preparing carbon nanotubes, for example, methane, ethylene, or acetylene (C₂H₂). Particularly, the hydrocarbon gas 14 is acetylene (C₂H₂). The dilution gas 12 may be nitrogen. In the reaction furnace 22, the hydrocarbon gas 14 is thermally decomposed by the copper nanoparticle to form the carbon nanosphere 16.

The temperature in the reaction furnace 22 may be 450-600°C. If the temperature in the reaction furnace 22 is less than 450°C, the metal cannot be completely decomposed from the organic metal compound 10, thereby not allowing for the catalytic action. Further, the decomposition of carbon is too slow, and thus, the structure of the carbon nanosphere 16 cannot be completely formed. If the temperature in the reaction furnace 22 is greater than 600°C, the decomposition of carbon is too fast, the number of walls of the carbon nanosphere 16 increases, resulting in a too thick carbon nanosphere, although the crystallinity increases.

The mean residence time of the above reactants in the reaction furnace 22 may be 20-40 minutes. If the mean residence time in the reaction furnace 22 is less than 20 minutes, the structure of the carbon nanosphere 16 cannot be completely formed. If the mean residence time in the reaction furnace 22 is greater than 40 minutes, the number of walls of the carbon nanosphere 16 increases, resulting in a too thick carbon nanosphere.

Since the residence time of the reactants in the reaction furnace 22 is shorter than in the conventional method as described above, defects are generated in C-C bonds in the carbon nanosphere 16. The reason why the defects are generated is that the environments in which the carbon nanosphere 16 is grown are rapidly changed as the carbon nanosphere 16 passes through the preheating region 20 and the heating furnace 22, and thus crystals having a constant size cannot be formed.

Although some of the defects may be opened during the growth of the carbon nanosphere 16 to a certain degree, most of the defects are generally opened by treating the carbon nanosphere 16 with a strong acid to oxidize the defect portions first. The number of the defects may be one, two, three or more. When one defect is present in the carbon nanosphere 16, the carbon nanosphere 16 is in the form of a pot with an open hole after the defect is oxidized. When two defects are present in the carbon nanosphere 16, the carbon nanosphere 16 is in the form of a short tube with its middle portion expanded after the defects are oxidized. When one opening is present in the carbon nanosphere 16, a flow entering the carbon nanosphere 16 and a flow exiting the carbon nanosphere 16 shares the identical space, and thus, a mass transfer may be less than when at least two openings are present. However, since only a small portion of the total carbon nanospheres 16 has only one opening, the presence of the carbon nanospheres with only one opening does not have a decisive effect on the total physical properties of the carbon nanospheres 16.

As described above, in order to obtain the carbon nanosphere 16 having the desired diameter and wall thickness, ratios of flow rates of reactants supplied must be suitably controlled.

A molar flow rate of the hydrocarbon gas 14 may be 0.0006-0.0025 times a molar flow rate of the dilution gas 12. If the molar flow rate of the hydrocarbon gas 14 is less than 0.0006 times the molar flow rate of the dilution gas 12, the amount of the carbon required to form the structure of the carbon nanosphere 16 is not sufficient, and thus the desired carbon nanosphere 16 cannot be completely formed. If the molar flow rate of the hydrocarbon gas 14 is greater than 0.0025 times the molar flow rate of the dilution gas 12, too much carbon is decomposed, and thus the wall thickness of the carbon nanosphere 16 can be too thick.

The amount and the structure of the carbon nanosphere 16 formed depend on the flow rates of the dilution gas 12 and the hydrocarbon gas 14 and the residence time in the reaction furnace 22, regardless of the amount of the organic metal compound 10 used, as long as the amount of the organic metal compound 10 is at least a specific minimum amount. That is, when a sufficient amount of the organic metal compound 10 is present in the reaction furnace 22, the amount and the structure of the carbon nanosphere 16 formed depend on the flow rates of the dilution gas 12 and the hydrocarbon gas 14 and the residence time in the reaction furnace 22. Thus, it is required to supply a sufficient amount of the organic metal compound 10 to the reaction furnace 22. For this, a sufficient amount of the organic metal compound 10 may be introduced into the reaction furnace 22 before starting the reaction, and the reaction may be stopped when a residual amount of the organic metal compound 10 is less than the required minimum amount due to the consumption during the reaction. Alternatively, an excess amount of the organic metal compound 10 may be introduced into the reaction furnace 22 together with the other reactants.

When the organic metal compound 10 is copper tartrate, the required minimum amount of the copper tartrate is 12.5 g per gram of the carbon nanosphere 16 formed. Thus, when the copper tartrate is to be introduced into the reaction furnace 22 before starting the reaction, the weight of the copper tartrate introduced must be at least 12.5 times the weight of the carbon nanosphere 16 to be formed. When an excess amount of the copper tartrate is to be introduced into the reaction furnace 22 together with the other reactants, the flow rate of the copper tartrate must be at least 12.5 times a formation rate of the carbon nanosphere 16.

The amount of the copper tartrate supplied may be 12.5-100 g per gram of the carbon nanosphere 16 formed. If the amount of the copper tartrate supplied is less than 12.5 g per gram of the carbon nanosphere 16 formed, the carbon nanosphere having the desired structure cannot be obtained. If the amount of the copper tartrate supplied is greater than 100 g per gram of the carbon nanosphere 16 formed, a size of the reaction furnace 22 should be increased and the production costs is increased.

Since the carbon nanosphere 16 obtained in the reaction furnace 22 does not have an opening, it has a small surface area and high mass transfer resistance and cannot impregnate many metal catalyst particles. In order to form openings on a surface of the carbon nanosphere 16, the carbon nanosphere 16 must be treated with a strong acid. When the carbon nanosphere 16 is treated with the acid, defect portions are first oxidized, thereby forming openings on the surface of the carbon nanosphere 16. As a result, a carbon nanosphere 18 having at least one opening is obtained. The acid used is nitric acid.

A carbon nanosphere having at least one opening may be prepared using the method according to the previous embodiment. The carbon nanosphere may have openings all over its surface and a diameter of 100-350 nm and a wall thickness of 5-30 nm. Each of the openings has a diameter of 5-150 nm.

If the diameter of the carbon nanosphere having at least one opening is less than 100 nm, a space into which the catalyst can penetrate is too small, thereby decreasing the utilization of the catalyst. If the diameter of the carbon nanosphere having at least one opening is greater than 350 nm, the specific surface area is decreased and the carbon nanosphere cannot function as a catalyst carrier.

If the wall thickness of the carbon nanosphere having at least one opening is less than 5 nm, a mechanical strength is not sufficient. If the wall thickness of the carbon nanosphere having at least one opening is greater than 30 nm, the openings cannot be easily formed.

If the diameter of each of the openings is less than 5 nm, the catalyst particles cannot easily enter the openings of the carbon nanosphere and cannot be uniformly distributed in the inside and outside of the carbon nanosphere, and further a good mass transfer is not attained, thereby decreasing the catalytic efficiency. If the diameter of each of the openings is greater than 150 nm, the specific surface area is decreased and the carbon nanosphere cannot function as a catalyst carrier.

The metal catalyst may be supported on the carbon nanosphere having at least one opening using a conventional method. The metal catalyst particles to be supported may have an average particle size of 2-5 nm. If the average particle size of the metal catalyst particles is less than 2 nm, the metal catalyst particles cannot sufficiently provide an active site for the catalytic reaction. If the average particle size of the metal catalyst particles is greater than 5 nm, the specific surface area is decreased, thereby reducing the catalytic efficiency.

The metal catalyst particles used in the carbon nanosphere-supported catalyst are not specifically limited, but may be platinum (Pt) or a Pt alloy when the supported catalyst is used in a proton exchange membrane fuel cell (PEMFC) or a direct methanol fuel cell (DMFC). The Pt alloy may be a Pt alloy with Ti, Cr, Mn, Fe, Co, Ni, Cu, Ga, Zr, Hf, Ru, Ir, Pd, Os or a mixture thereof. In the DMFC, methanol is oxidized to generate carbon monoxide, which causes poisoning of a Pt catalyst. To prevent this poisoning, the Pt alloy catalyst may be used.

The carbon nanosphere-supported catalyst may be used as an active component in an electrode of a fuel cell. The electrode for the fuel cell may be prepared using a conventional method. For example, the carbon nanosphere-impregnated catalyst is dispersed in a solution of an ionomer, such as Nafion, in isopropyl alcohol to prepare a slurry, and then the slurry is coated on a waterproof carbon paper using spray coating and then dried to obtain the electrode.

A fuel cell according to an embodiment of the present invention may be a PEMFC, a DMFC, etc. Fuel cells may be classified into alkaline, phosphoric acid, molten carbonate, solid oxide, and solid polymer electrolyte fuel cells according to a type of an electrolyte used. In particular, when a Pt catalyst is used, the carbon nanosphere-supported catalyst is suitable for alkaline, phosphoric acid, and solid polymer electrolyte fuel cells. Since the DMFC has the same structure as the solid polymer electrolyte fuel cell, the carbon nanosphere-supported catalyst may also be used in the DMFC. Since a liquid fuel may be efficiently diffused through the inside of the carbon nanosphere having at least one opening, the carbon nanosphere-supported catalyst is particularly suitable for the DMFC.

Hereinafter, the present invention will be described in more detail with reference to the following examples. However, these examples are given for the purpose of illustration and are not intended to limit the scope of the invention.

### Examples 1-3

A reaction furnace was purged with a dilution gas at a volumetric flow rate of 500 sccm (standard cubic centimeter per minute) under an atmospheric pressure while the temperature of the reaction furnace was elevated to a temperature listed in Table 1. Copper tartrate (CuC₄H₄O₆·H₂O) was used as an organic metal compound and acetylene was used as a hydrocarbon gas to form carbon nanospheres. A flow rate of the dilution gas was 16 L/min and the formed carbon nanospheres were treated with nitric acid to obtain carbon nanospheres having at least one opening. The reaction conditions of Examples 1-3 are shown in Table 1.

**Table 1**

| | Temperature (°C) | | Residence Time (min) | | Ramp rate (°C/min) | Flow rate of hydrocarbon gas (ml/min) | Dilution gas |
|---|---|---|---|---|---|---|---|
| | Preheating region | Reaction furnace | Preheating region | Reaction furnace | | | |
| Example 1 | 200 | 450 | 20 | 30 | 12.5 | 10 | Argon |
| Example 2 | 150 | 500 | 30 | 20 | 17.5 | 30 | Nitrogen |
| Example 3 | 100 | 600 | 40 | 30 | 20 | 20 | Nitrogen |

The carbon nanospheres having at least one opening, prepared under the conditions described in Table 1, exhibited the physical properties listed in Table 2.

**Table 2**

| | Diameter of carbon nanosphere (nm) | Wall thickness (nm) |
|---|---|---|
| Example 1 | 200 | 10 |
| Example 2 | 250 | 25 |
| Example 3 | 300 | 20 |

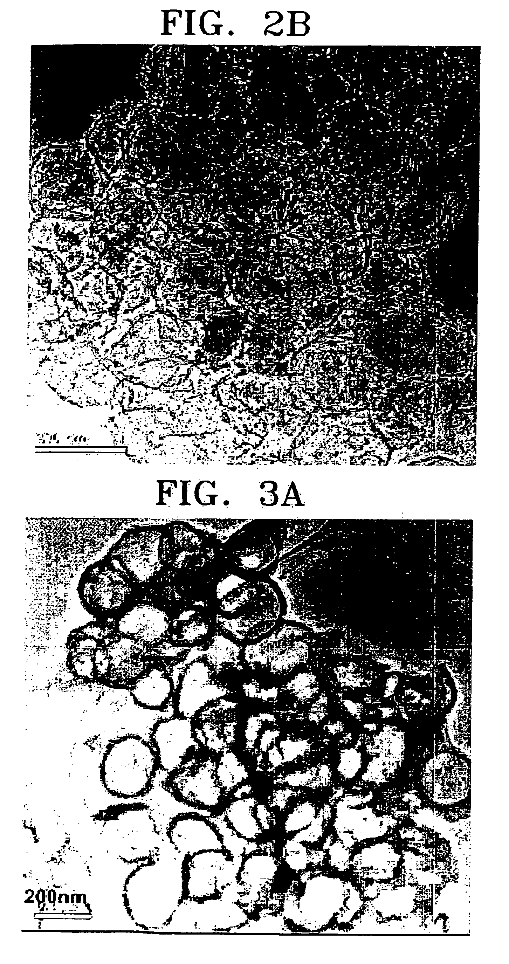

FIGS. 2A and 2B are transmission electron microscopic (TEM) photos of the carbon nanospheres thus obtained. It was confirmed from FIGS. 2A and 2B that each of the obtained carbon nanospheres had openings.

### Examples 4 and 5

In order to confirm the effects of the reaction conditions on the shape of carbon nanosphere, experiments were preformed by changing the reaction conditions. Copper tartrate (CuC₄H₄O₆·H₂O) was used as an organic metal compound and acetylene was used as a hydrocarbon gas. A flow rate of the dilution gas was 16 Umin and the formed carbon nanospheres were treated with nitric acid. The reaction conditions of Examples 4 and 5 are shown in Table 3.

**Table 3**

| | Temperature (°C) | | Residence Time (min) | | Ramp rate (°C/min) | Flow rate of hydrocarbon gas (ml/min) | Dilution gas |
|---|---|---|---|---|---|---|---|
| | Preheating region | Reaction furnace | Preheating region | Reaction furnace | | | |
| Example 4 | 150 | 700 | 30 | 30 | 15.7 | 40 | Argon |
| Example 5 | 100 | 750 | 40 | 30 | 16.3 | 25 | Nitrogen |

The carbon nanospheres having at least one opening, prepared under the conditions described in Table 3, exhibited the physical properties listed in Table 4.

**Table 4**

| | Diameter of carbon nanosphere (nm) | Wall thickness (nm) |
|---|---|---|
| Example 4 | 500 | 35 |
| Example 5 | 600 | 30 |

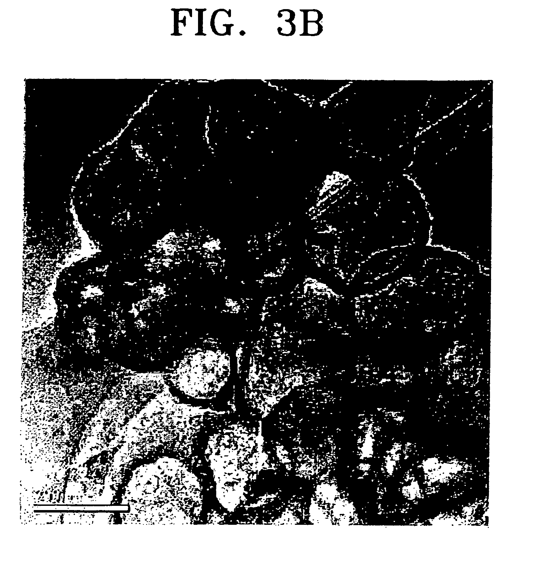

FIGS. 3A and 3B respectively are TEM photos of the carbon nanospheres of Examples 4 and 5. The obtained carbon nanospheres had openings, but the openings were insufficiently formed, relative to the openings in the carbon nanospheres obtained in Examples 1-3.

Specifically, it was confirmed from the results in Tables 2 and 4 that the carbon nanospheres obtained in Examples 1-3 had smaller wall thicknesses than the carbon nanospheres obtained in Examples 4 and 5. When the wall thickness is small, the openings can be well formed during the acid treatment, and vice versa. Thus, since the carbon nanospheres obtained in Examples 1-3 had smaller wall thicknesses than the carbon nanospheres obtained in Examples 4 and 5, it was expected that the carbon nanospheres obtained in Examples 1-3 had more openings than the carbon nanospheres obtained in Examples 4 and 5. It was confirmed from the TEM photos in FIGS. 2A, 2B, 3A and 3B that the openings were sufficiently formed in the carbon nanospheres obtained in Examples 1-3, while the openings were less formed in the carbon nanospheres obtained in Examples 4 and 5. Thus, it is estimated that whether the openings are well formed or not depends on the temperature in the reaction furnace, the residence time, and/or the ratios of flow rates of the reactants.

### Example 6

### Preparation of a carbon nanosphere-supported catalyst

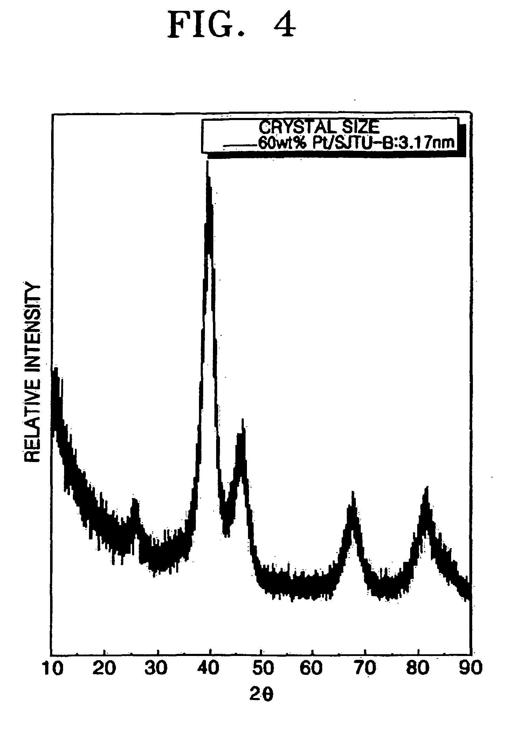

0.5 g of the carbon nanosphere having at least one opening obtained in Example 1 as a carbon support was placed in a plastic bag, and then 1.9236 g of H₂PtCl₆ was weighed and dissolved in 1.5 mL of acetone in a beaker. The obtained solution was mixed with the carbon carrier in the plastic bag. The mixture was dried in air for 4 hours, and then was transferred to a crucible and dried in a drier at a temperature of 60 °C overnight. Then, the crucible was placed in an electric furnace in which nitrogen flows and the nitrogen was allowed to flow for 10 minutes. Next, nitrogen gas was replaced with hydrogen gas and the temperature in the electric furnace was raised from room temperature to 200°C and maintained for 2 hours to reduce a Pt salt impregnated on the carbon support. The hydrogen gas was replaced with nitrogen gas and the temperature in the electric furnace was raised to 250°C at a rate of 5°C /min and maintained at 250°C for 5 hours, and then cooled to room temperature. Thus, a carbon nanosphere-supported catalyst with a loading of Pt supported equal to 60% by weight was obtained. An X-ray diffraction (XRD) graph for the obtained carbon nanosphere-supported catalyst is shown in FIG. 4. An average particle size of the metal particles impregnated on the support was 3.2 nm.

### Preparation of a fuel cell

The carbon nanosphere-supported catalyst prepared in Example 6 was dispersed in a dispersion solution of Nafion 115 (available from DuPont) in isopropyl alcohol to prepare a slurry and was coated on a carbon electrode using a spray process so as to obtain a concentration of 1 mg/cm² of the coated catalyst based on a Pt loading. Then, the electrode was passed through a rolling machine to enhance adhesion between a catalyst layer and a carbon paper, thereby obtaining a cathode. An anode was prepared using a commercially available PtRu Black catalyst and a unit cell was prepared using the cathode and the anode.

### Performance test of the unit cell

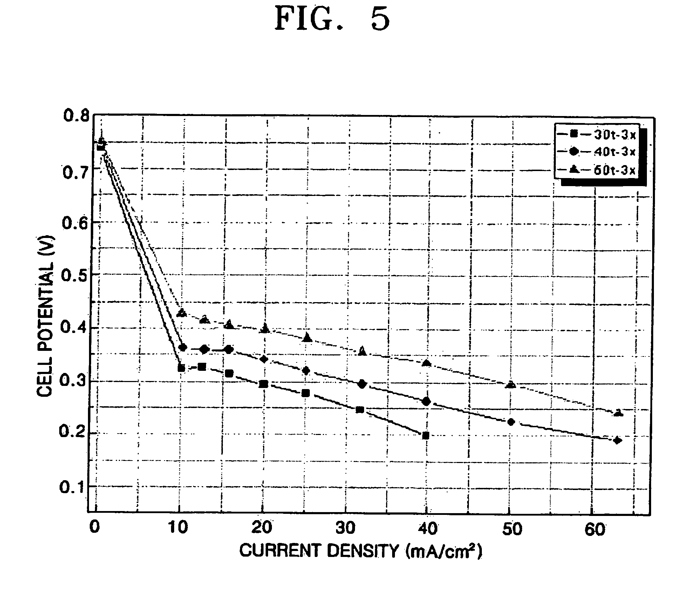

The performance of the unit cell obtained above was measured at 30°C, 40°C, and 50°C while excessively supplying 1 M methanol and air. The results are shown in FIG. 5. Although the fuel cell according to the present invention used the catalyst per unit area in an amount of 1 mg/cm² or less, it had the equivalent or better performance than a conventional fuel cell using a catalyst per unit area in an amount of 2-4 mg/cm².

As described above, a carbon nanosphere having at least one opening has higher utilization of a surface area and electrical conductivity and lower mass transfer resistance than a conventional carbon nanosphere or carbon nanotube, thus allowing for higher current density and cell voltage with a smaller amount of metal catalyst per unit area of a fuel cell electrode.

Further, in a method of preparing a carbon nanosphere having at least one opening according to the present invention, the carbon nanosphere having at least one opening can be obtained in a simpler and more efficient manner than a conventional method.

## Claims

1. A method of preparing a carbon nanosphere having at least one opening, wherein the opening has a diameter of 5-150 nm, comprising:
heating an organic metal compound in a preheating region to evaporate hydrated water molecules from the organic metal compound;
heating the resultant organic metal compound, a dilution gas, and a hydrocarbon gas in a reaction furnace to grow a carbon nanosphere; and
treating the resultant carbon nanosphere with nitric acid.

2. The method according to claim 1, wherein the organic metal compound is copper tartrate.

3. The method according to claim 2, wherein the amount of the copper tartrate supplied is 12.5-100 g per gram of the carbon nanosphere formed.

4. The method according to any of claims 1 to 3, wherein the temperature in the reaction furnace is 450-600°C, the temperature in the preheating region is 100-200°C, and the residence time in each of the preheating region and the reaction furnace is 20-40 minutes.

5. The method according to claims 1 to 4, wherein a molar flow rate of the hydrocarbon gas is 0.0006-0.0025 times a molar flow rate of the dilution gas.

6. The method according to any of claims 1 to 5, wherein the hydrocarbon gas is acetylene (C₂H₂) and the dilution gas is nitrogen.

7. A carbon nanosphere-supported catalyst, comprising;
a carbon nanosphere having at least one opening, prepared using the method of any one of claims 1 to 6; and
metal catalyst particles uniformly supported on an inner wall and an outer wall of the carbon nanosphere having the at least one opening.

8. The carbon nanosphere-supported catalyst according to claim 7, wherein the carbon nanosphere has a diameter of 100-350 nm and a wall thickness of 5-30 nm, and the metal catalyst particles have an average particle size of 2-5 nm.

9. The carbon nanosphere-supported catalyst according to claim 7 or 8, wherein the carbon nanosphere has a single-walled or a multiple-walled structure.

10. The carbon nanosphere- supported catalyst according to any of claims 7 to 9, wherein the metal catalyst is platinum or a platinum alloy.

11. The carbon nanosphere- supported catalyst according to claim 10, wherein the metal used in the platinum alloy is out of Ti, Cr, Mn, Fe, Co, Ni, Cu, Ga, Zr, Hf, Ru, and a mixture thereof.

12. A fuel cell comprising:
a cathode;
an anode; and
an electrolyte membrane interposed between the cathode and the anode,
wherein at least one of the cathode and the anode contains the carbon nanosphere- supported catalyst according to any of claims 7 to 11.

13. The fuel cell according to claim 12, wherein the carbon nanosphere-supported catalyst has the metal catalyst particles with an average particle size of 2-5 nm supported on an inner wall and an outer wall of the carbon nanosphere having at least one opening and having a diameter of 100-350 nm and a wall thickness of 5-30 nm.

## Patentansprüche

1. Verfahren zur Herstellung eines Kohlenstoff-Nanokügelchens mit wenigstens einer Öffnung, wobei die Öffnung einen Durchmesser von 5-150 nm aufweist, umfassend:
Erhitzen einer organischen Metallverbindung in einem Vorwärmbereich zwecks Verdampfung hydratisierter Wassermoleküle von der organischen Metallverbindung;
Erhitzen der erhaltenen organischen Metallverbindung, eines Verdünnungsgases und eines Kohlenwasserstoffgases in einem Reaktionsofen zwecks Züchtung eines Kohlenstoff-Nanokügelchens; und
Behandeln des erhaltenen Kohlenstoff-Nanokügelchens mit Salpetersäure.

2. Verfahren nach Anspruch 1, wobei die organische Metallverbindung Kupfertartrat ist.

3. Verfahren nach Anspruch 2, wobei die zugeführte Menge des Kupfertartrats 12,5-100 g pro Gramm des ausgebildeten Kohlenstoff-Nanokügelchens beträgt.

4. Verfahren nach einem der Ansprüche 1 bis 3, wobei die Temperatur im Reaktionsofen 450-600°C beträgt, die Temperatur im Vorwärmbereich 100-200°C beträgt und die Verweilzeit im Vorwärmbereich und im Reaktionsofen jeweils 20-40 Minuten beträgt.

5. Verfahren nach den Ansprüchen 1 bis 4, wobei ein Stoffmengendurchfluss des Kohlenwasserstoffgases das 0,0006-0,0025-fache eines Stoffmengendurchflusses des Verdünnungsgases beträgt.

6. Verfahren nach einem der Ansprüche 1 bis 5, wobei das Kohlenwasserstoffgas Acetylen (C₂H₂) ist und das Verdünnungsgas Stickstoff ist.

7. Auf einem Kohlenstoff-Nanokügelchen getragener Katalysator, umfassend:
ein Kohlenstoff-Nanokügelchen mit wenigstens einer Öffnung, das unter Verwendung des Verfahrens nach einem der Ansprüche 1 bis 6 hergestellt ist; und
metallische Katalysatorteilchen, die gleichmäßig auf einer Innenwand und einer Außenwand des Kohlenstoff-Nanokügelchens mit der wenigstens einen Öffnung getragen werden.

8. Auf einem Kohlenstoff-Nanokügelchen getragener Katalysator nach Anspruch 7, wobei das Kohlenstoff-Nanokügelchen einen Durchmesser von 100-350 nm und eine Wanddicke von 5-30 nm aufweist und die metallischen Katalysatorteilchen eine mittlere Korngröße von 2-5 nm aufweisen.

9. Auf einem Kohlenstoff-Nanokügelchen getragener Katalysator nach Anspruch 7 oder 8, wobei das Kohlenstoff-Nanokügelchen eine Struktur mit einer einzigen Wand oder mit mehreren Wänden aufweist.

10. Auf einem Kohlenstoff-Nanokügelchen getragener Katalysator nach einem der Ansprüche 7 bis 9, wobei der metallische Katalysator Platin oder eine Platinlegierung ist.

11. Auf einem Kohlenstoff-Nanokügelchen getragener Katalysator nach Anspruch 10, wobei das in der Platinlegierung verwendete Metall aus Ti, Cr, Mn, Fe, Co, Ni, Cu, Ga, Zr, Hf, Ru und einem Gemisch davon ausgewählt ist.

12. Brennstoffzelle umfassend:
eine Kathode;
eine Anode; und
eine zwischen der Kathode und der Anode angeordnete Elektrolytmembran,
wobei wenigstens eine der Kathode und der Anode den auf einem Kohlenstoff-Nanokügelchen getragenen Katalysator nach einem der Ansprüche 7 bis 11 enthält.

13. Brennstoffzelle nach Anspruch 12, wobei bei dem von einem Kohlenstoff-Nanokügelchen getragenen Katalysator die metallischen Katalysatorteilchen mit einer mittleren Korngröße von 2-5 nm auf einer Innenwand und einer Außenwand des Kohlenstoff-Nanokügelchens mit wenigstens einer Öffnung und einem Durchmesser von 100-350 nm und einer Wanddicke von 5-30 nm getragen werden.

## Revendications

1. Procédé de préparation d'une nanosphère de carbone ayant au moins une ouverture, dans lequel l'ouverture a un diamètre de 5 à 150 nm, comprenant les étapes consistant à :
chauffer un composé métallique organique dans une région de préchauffage afin que des molécules d'eau hydratées s'évaporent du composé métallique organique ;
chauffer le composé métallique organique résultant, un gaz de dilution, et un gaz hydrocarboné dans un four de réaction afin de faire croître une nanosphère de carbone ; et
traiter la nanosphère de carbone résultante avec de l'acide nitrique.

2. Procédé selon la revendication 1, dans lequel le composé métallique organique est du tartrate de cuivre.

3. Procédé selon la revendication 2, dans lequel la quantité de tartrate de cuivre fournie est de 12,5 à 100 g par gramme de la nanosphère de carbone formée.

4. Procédé selon l'une quelconque des revendications 1 à 3, dans lequel la température dans le four de réaction est de 450 à 600 °C, la température dans la région de préchauffage est de 100 à 200 °C, et le temps de séjour dans chacun de la région de préchauffage et du four de réaction est de 20 à 40 minutes.

5. Procédé selon les revendications 1 à 4, dans lequel un débit molaire du gaz hydrocarboné est de 0,0006 à 0,0025 fois un débit molaire du gaz de dilution.

6. Procédé selon l'une quelconque des revendications 1 à 5, dans lequel le gaz hydrocarboné est l'acétylène (C₂H₂) et le gaz de dilution est l'azote.

7. Catalyseur supporté par nanosphère de carbone, comprenant :
une nanosphère de carbone ayant au moins une ouverture, préparée en utilisant le procédé de l'une quelconque des revendications 1 à 6 ; et
des particules de catalyseur métallique supportées uniformément sur une paroi interne et une paroi externe de la nanosphère de carbone ayant la au moins une ouverture.

8. Catalyseur supporté par nanosphère de carbone selon la revendication 7, dans lequel la nanosphère de carbone a un diamètre de 100 à 350 nm et une épaisseur de paroi de 5 à 30 nm, et les particules de catalyseur métallique ont une taille moyenne de particule de 2 à 5 nm.

9. Catalyseur supporté par nanosphère de carbone selon la revendication 7 ou 8, dans lequel la nanosphère de carbone a une structure monoparoi ou à parois multiples.

10. Catalyseur supporté par nanosphère de carbone selon l'une quelconque des revendications 7 à 9, dans lequel le catalyseur métallique est du platine ou un alliage de platine.

11. Catalyseur supporté par nanosphère de carbone selon la revendication 10, dans lequel le métal utilisé dans l'alliage de platine est parmi Ti, Cr, Mn, Fe, Co, Ni, Cu, Ga, Zr, Hf, Ru et un mélange de ceux-ci.

12. Pile à combustible comprenant:
une cathode ;
une anode ; et
une membrane à électrolyte intercalée entre la cathode et l'anode,
dans laquelle au moins l'une de la cathode et de l'anode contient le catalyseur supporté par nanosphère de carbone selon l'une quelconque des revendications 7 à 11.

13. Pile à combustible selon la revendication 12, dans laquelle le catalyseur supporté par nanosphère de carbone comprend les particules de catalyseur métallique ayant une taille moyenne de particule de 2 à 5 nm supportées sur une paroi interne et une paroi externe de la nanosphère de carbone ayant au moins une ouverture et ayant un diamètre de 100 à 350 nm et une épaisseur de paroi de 5 à 30 nm.
